# EUROPEAN PATENT APPLICATION

(11) **EP 1 408 445 A2**
(43) Date of publication of application: **14.04.2004**
(21) Application number: 03256161.5
(22) Date of filing: 30.09.2003
(51) Int. Cl.: G06N 3/04

(54) **Physics based neural network for validating data**

(30) Priority: 30.09.2002 US 261237
(71) Applicant: UNITED TECHNOLOGIES CORPORATION, Hartford, Connecticut 06101 (US)
(72) Inventor: Depold, Hans R., Bolton Connecticut 06043 (US); Sirag Jr, David J., Ellington Connecticut 06029 (US)
(74) Representative: Power, Philippa Louise

(57) **Abstract**

A physics based neural network (PBNN) for validating data in a physical system comprising a plurality of input nodes each receiving at least one input comprising an average measurement of a component and a standard deviation measurement of a component of the physical system and comprising a transfer function for converting the at least one input into an output, a plurality of intermediate nodes each receiving at least one output from at least one of the plurality of input nodes and comprising a transfer function embedded with knowledge of the physical system for converting the at least one output into an intermediate output, and a plurality of output nodes each receiving at least one intermediate outputs from the plurality of intermediate nodes and comprising a transfer function for outputting the average measurement of a component when the transfer function evaluates to a value greater than zero wherein the PBNN is trained with a predetermined data set.

## Description

### BACKGROUND OF THE INVENTION

### (1) Field of the Invention

The present invention relates to a physics based neural network (PBNN) for validating input data streams. More specifically, the present invention relates to a PBNN applying a heuristic model to a plurality of physical system inputs to identify outlier data and persistent system changes, and validate non-anomalous data inputs.

### (2) Description of Related Art

Monitoring complex physical systems for spurious data indicative of impending failure or other adverse events is well known. Typically, such events appear as a scattering of monitored data. When data scatter occurs, the scatter is either accepted and flagged or the data is removed. When the data is accepted, the scatter is assumed to be associated with the instrumentation. Analysis to account for non-system scatter that can be imparted randomly or through systematic errors in other measurements and measurement conditioning and correction is typically done by an expert.

For example an error in the operating condition of an airplane (altitude, Mach number, or TAT) induces a systematic error in the corrected engine data. An error reading the engine power setting introduces another systematic error. An error writing down a value introduces an error affecting a single parameter or several parameters depending on the physics of the system and the data reduction method. Engineers have learned how to recognize the systematic and random errors that clearly represent something inconsistent with the physics of the system. These errors are removed by hand or flagged as questionable. When an individual parameter has scatter and is used, the entire hyperspace vector is in error. If the parameter is discarded, that entire hyperspace vector is discarded. The quality of the data is degraded in either case.

It would be preferable to remove the human interaction of an engineer in such instances with an automated system. One common methodology for so doing involves constructing and training a neural network to identify errors in data streams and systems. A neural network is a multilayered, hierarchical arrangement of identical processing elements, also referred to as neurons. Each neuron can have one or more inputs but only one output. Each neuron input is weighted by a coefficient. The output of a neuron is typically a function of the sum of its weighted inputs and a bias value. This function, also referred to as an activation function or sometimes a transfer function, is often a sigmoid function. That is, the activation function may be S-shaped, monotonically increasing and asymptotically approaching fixed values as its input(s) respectively approaches positive or negative infinity. The sigmoid function and the individual neural weight and bias values determine the response of the neuron to input signals.

In the hierarchical arrangement of neurons, the output of a neuron in one layer may be distributed as an input to one or more neurons in a next layer. A typical neural network may include an input layer and two (2) distinct layers; namely, an input layer, an intermediate neuron layer, and an output neuron layer. The nodes of the input layer are not neurons. Rather, the nodes of the input layer have only one input and basically provide the input, unprocessed, to the inputs of the next layer.

The use of neural networks often involves two (2) successive steps. First, the neural network is trained on known inputs having known output values (or classifications). As the training inputs are fed to the neural network, the values of the neural weights and biases are adjusted (e.g., a back-propagation technique) such that the output of the neural network of each individual training pattern approaches or matches the known output. In this way the weights and biases converge towards a locally optimal solution or a minimized an error. In practice, the system is not trained to the point where it converges to an optimal solution because that would require all the data. The system would then be "over trained" such that it would be too specialized to the training data and might not be good at classifying inputs which differ, from those in the training set.

Once the neural network is trained, it can then be used to classify unknown inputs in accordance with the weights and biases determined during training. If the neural network can classify the unknown input with confidence, one of the outputs of the neurons in the output layer will be much higher than the others.

To ensure that the weight and bias terms do not diverge, the algorithm uses small steps. Consequently, convergence is slow. Also, the number of neurons in the hidden layer cannot easily be determined a priori. Consequently, multiple time-consuming experiments are often run to determine the optimal number of hidden neurons.

A related alternative to neural networks is Bayesian networks. Bayesian networks use hypotheses as intermediaries between data (e.g., input feature vectors) and predictions (e.g., classifications). The probability of each hypothesis, given the data may be estimated. A prediction is made from the hypotheses using Conditional (posterior) probabilities of the hypotheses to weight the individual predictions of each of the hypotheses. A Bayesian network includes variables and directed edges between the variables, thereby defining a directed acylic graph (or "DAG"). Each variable can assume any of a finite number of mutually exclusive states.

Assuming that the structure of the Bayesian network is known and the variables are observable, only the set of conditional probability tables need be learned. These tables can be estimated directly using statistics from a set of learning examples. If the structure is known but the variables are hidden, Bayesian networks may be trained, as was the case with neural networks. Using prior knowledge can shorten the learning process.

Support vector machines (or "SVMs") are another type of trainable classifier. SVMs are reportedly more accurate at classification than naive Bayesian networks in certain applications, such as text classification. They are also reportedly more accurate than neural networks in certain applications, such as reading handwritten characters. Unfortunately, however, SVMs reportedly take longer to train than naive Bayesian classifiers.

An object to be classified may be represented by a number of features. If, for example, the object to be classified is represented by two features, it may be represented by a point in two dimensional space. Similarly, if the object to be classified is represented by n features, also referred to as a "feature vector", it may be represented by a point in n-dimensional space. The simplest form of an SVM defines a plane in the n-dimensional space (also referred to as a hyperplane) which separates feature vector points associated with objects "in a class" and feature vector points associated with objects "not in the class". A number of classes can be defined by defining a number of hyperplanes. The hyperplane defined by a trained SVM maximizes a distance (also referred to as an Euclidean distance) from it to the closest points "in the class" and "not in the class". Maximum separation reduced overlap and ambiguity. The SVM defined by the hyperplane that maximizes the distances "d" is therefore likely robust to input noise.

While neural networks and related networks offer robust, trainable solutions to the problem of validating a spurious data event, they likewise require much training, are unstable beyond the range of training data, and because of their generality, cannot incorporate heuristic knowledge of the physical systems which they are meant to model.

What is therefore needed, is an apparatus and method for improving data quality by removing data scatter that is not related to the equipment but which could have been caused by the weather, the pilot/operator, unmodeled control/system features, calculation processes such as correction of the data to standard conditions, aircraft or other separate equipment problems, data input, or human factors and intervention. Preferably such a system would incorporate the advantages of neural networks.

### SUMMARY OF THE INVENTION

Accordingly, it is an object of the present invention to provide a PBNN applying a heuristic model to a plurality of physical system inputs to identify outlier data and persistent system changes, and validate non-anomalous data inputs.

In accordance with the present invention, a physics based neural network (PBNN) for validating data in a physical system comprises a plurality of input nodes each receiving at least one input comprising an average measurement of a component and a standard deviation measurement of a component of the physical system and comprising a transfer function for converting the at least one input into an output, a plurality of intermediate nodes each receiving at least one output from at least one of the plurality of input nodes and comprising a transfer function embedded with knowledge of the physical system for converting the at least one output into an intermediate output, and a plurality of output nodes each receiving at least one intermediate outputs from the plurality of intermediate nodes and comprising a transfer function for outputting the average measurement of a component when the transfer function evaluates to a value greater than zero wherein the PBNN is trained with a predetermined data set.

### BRIEF DESCRIPTION OF THE DRAWINGS

FIG. 1 - A diagram of the PBNN of the present invention.
FIG. 2 - an illustration of the suspect data patterns signifying possible anomalies.
FIG. 3 - A table illustrating an exemplary rule based decision making process of the present invention.

### DETAILED DESCRIPTION OF THE PREFERRED EMBODIMENT(S)

The present invention is directed to a physics based neural network (PBNN) for embedding engineering judgment to enable the PBNN to replace data, in which there is contained a suspected anomaly, with its most probable value. If no anomaly is present, the most probable value is the parameter's last good state. The PBNN of the present invention performs this function without removing good data and without obscuring shifts in data that might be occur due to real instrumentation or real physical power system problems.

PBNNs, as will be described more fully below, provide efficient computational mechanisms for the identification, representation, and solution of physical systems based on a partial understanding of the physics and without the need for extensive experimental data. Therefore, PBNNs form quasi-neural networks which recognize the fractal nature of real neural networks. As used herein "fractal" relates to the property of PBNNs scale up and down the concepts embedded within them. Scaling down is the process whereby individual neural functions are tailored using domain knowledge to create fully structured but partially understood processes that can be trained. Scaling up is the process whereby whole heuristic or computational processes are configured in a neural network and trained without the need for extensive experimental data.

A PBNN is a network of nodes, each of which consists of a set of inputs, a single output, and a transfer function between them. A single PBNN node is defined by specifying its transfer function and designating the outputs of other PBNN nodes as its input quantities. Processing through the node consists of collecting the input quantities, evaluating the transfer function, and setting the output to the result. The transfer function can consist of a connected collection of other PBNNs (called internal nodes) or any other mathematical relationship defined between the input and output values.

Internal nodes in a PBNN network can be other PBNN networks. Assembling a PBNN network for a given problem is done by decomposing its defined set of mathematical equations into a collection of nodes. Complex functions can then be decomposed of collections of more elementary functions, down to a reasonably low level of definition. Elementary PBNN nodes have been used to represent simple mathematical operations like sums or products, exponentials, and elementary trigonometric functions. Since a PBNN node in one network can consist of a complete network itself, the internal transfer function can become as complex as desired.

One interesting type of elementary PBNN node is the "parameter" node, where the underlying transfer function simply sets a constant output regardless of input. These nodes are used to represent parameters in a computation. They can be, however, designated as adaptive, and thereby tuned to a given problem.

A complete PBNN network is built from a set of PBNN nodes, with the internal connectivity defined by the underlying model. Once the individual nodes are defined and connected as desired, the user then selects which nodes will represent "output" quantities in the overall calculation. Additional nodes are designated as "training" quantities, which are modified as the network is tuned to a given problem. Finally, a set of nodes is designated as "input" nodes, whose values are set externally during each processing run. The collection of PBNN networks, input node set, training node set, and output node set, makes up a complete PBNN.

PBNN networks are run in two stages. The first, training stage, consists of presenting a known set of inputs and outputs to the PBNN network, and adjusting the training nodes to minimize the resulting error. This can be done in a variety of ways including, but not limited to, varieties of the backpropagation algorithm used in traditional neural networks, conjugate gradient methods, genetic algorithms, and the Alopex algorithm.

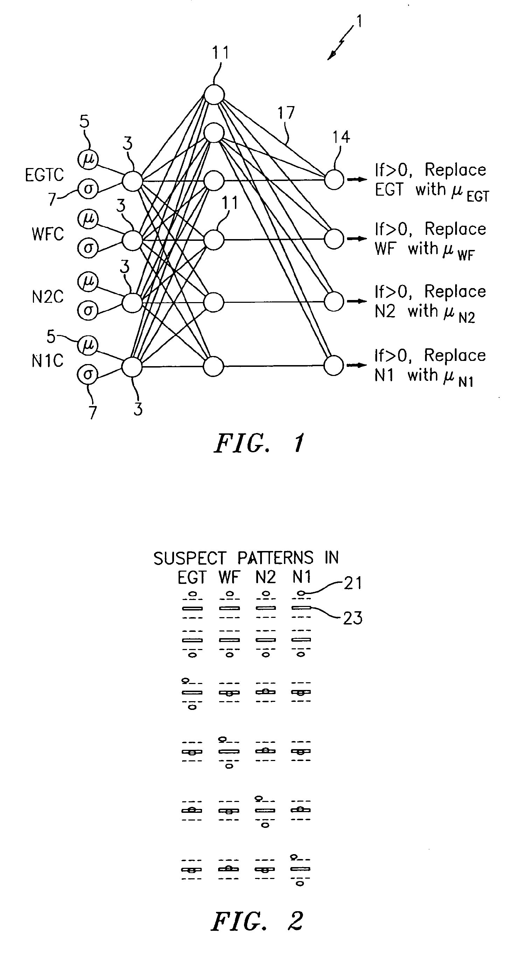

With reference to Fig. 1, there is illustrated a PBNN 1 of the present invention employing heuristics (engineering judgement) based on power system physics to recognize patterns (using templates) in multiple engine parameter levels that resemble instrumentation or other data problems that are not related to the normal physical functions of the power system, equipment, or instrumentation. While illustrated with reference to component measurements of an engine system, the present invention is drawn to a PBNN receiving as inputs any measurable quantities derived from a physical system.

The PBNN 1 is comprised of a plurality of input nodes 3 for receiving system input data. A single input node 3 is dedicated to receiving input pertaining to a single engine component. Specifically, the input data at each input node 3 is comprised of an average input data value 5 over a predetermined range of input values and a standard deviation 7 computed for the average input data. In a preferred embodiment, both the average input data value 5 and the standard deviation 7 are computed by PBNNs external to PBNN 1.

In the present example, the input data includes engine gas temperature (EGTC), fuel flow (WFC), high rotor speed (N2C) and low rotor speed (N1C)

PBNN 1 receives the input data and determines if an anamolous pattern is present and persistent at any input node 3, and if it is persistent, the PBNN accepts the input data for possible trend detection and analysis. If the pattern is not persistent and has a non-engine/system/powersystem/equipment signature, the statistical outlier confidence requirement is reduced from 99% to an appropriate lower level such as 85% to 90%. The appropriate level is determined by training the PBNN on a predetermined data set so as to recognize physically unexplainable data while accepting the physically explainable trend data.

For example, if the data has been determined with 90% statistical confidence that it is an outlier, and if it is determined with 90% confidence that the point is not physically possible, and the next point does not confirm the first point, then the first point actually achieves a 99% confidence level as an outlier. Because intermediate nodes 11 may have complex transfer functions represented by complex functions, there may be embedded into the transfer functions knowledge about the physical system of the engine. For example, it may be that for a given fuel flow, there exists a maximum engine temperature that is bounded by the physics of the system. If a measured engine temperature is in excess of such a maximum, the PBNN can use the knowledge embedded in its transfer functions to recognize the high probability that the elevated engine temperature is an anomaly.

If anomalous data is then declared an outlier, each declared outlier point is replaced by that parameter's best estimate prior to the data scatter. The best value is determined using the low frequency parameter filter that provides as input average input data value 5. Output nodes 14 apply a transfer function whereby each output is the average input data value 5 when the result of the transfer function is greater than 0. Another example of data that would be physically unexplainable would be an indication of high engine RPM after an engine is shut down. To avoid removing data that could be a systematic measuring problem, the PBNN keeps physically unexplainable data when it is persistent and could be caused by an instrumentation system, data system, or other systematic error.

With reference to Fig. 2, there is illustrated a plurality of suspect patterns which might be observed for the four measured parameters of Fig. 1. In this example it is not physically possible (with 90+% confidence) for just one of the key parameters to be an outlier above or below predicted value 23 while the other parameters remain steady. Likewise it is highly probable that when all four parameters 21 move consistently up or down, that there is a systematic error in something else such as power setting or an operating condition. In this example the classification threshold for declaring the parameters outliers is reduced. Still the data is not declared an outlier unless the condition is not persistent in the following point.

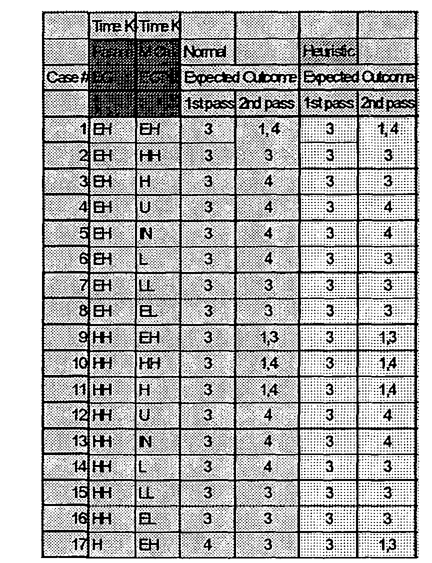

In addition to the embedded expert knowledge descriptive of the physical system, data that exhibits significant process change have expected properties. Data that does not match either the current process and also does not resemble a process change, falls in the category of data that does not contribute to the analysis. A series of logical tests based on expert knowledge (heuristics) is used to determine if data is less reliable and should be subjected to a tighter outlier test. The standard deviation for the more stringent outlier criteria is a variable that can be trained either to maximize data cleansing or to clean up a prescribed fraction of the data.

In addition to the expert's embedded knowledge of the possible physical states of a system, data that exhibit a significant process change have expected temporal patterns. For example, a process change is expected be persistent (more than one point), and in one direction (monotonic). Data that do not resemble either the existing state, a new physically possible state, or a temporal process change are likely to be outliers. A series of logical rules based on expert knowledge is used to determine if the temporal pattern of the data states implies less reliability with reference to the validity of the data. This logic applies to both normal data and data that was classified by the PBNN as physically unexplainable. In addition to tighter statistical bands the physically unexplainable data are subjected to more stringent process rules.

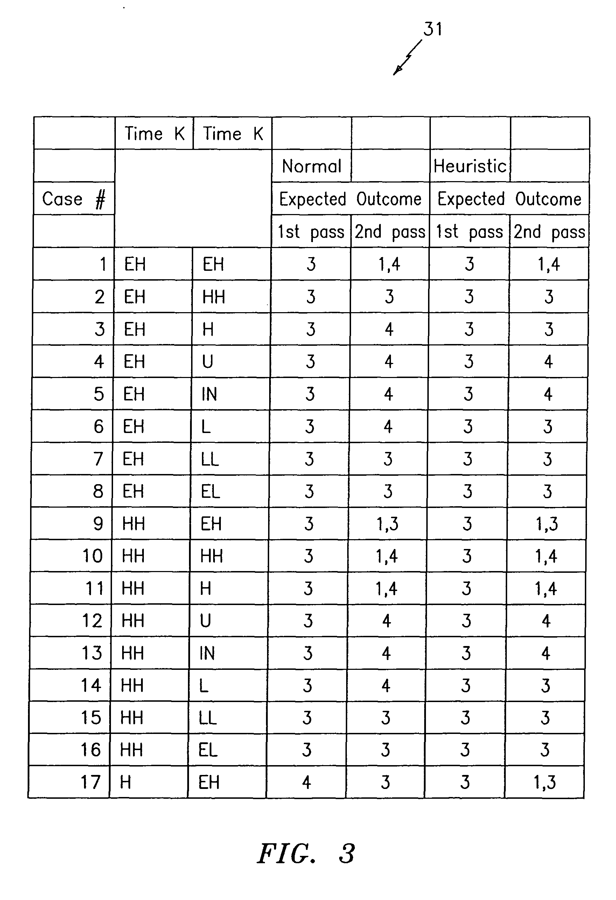

The standard deviations for the temporal pattern outlier criteria are variables that can be trained either to maximize data cleansing or to clean up a prescribed fraction of the data. With reference to Fig. 3, there is illustrated a table containing the rules of an exemplary implementation of the present invention. In the table 31, the inner band is labeled "IN" and contains data that resembles the most recent state of the measurement. The next statistical band is labeled "U" and contains an uncertain region just above and below the inner band. Data within these two regions is not known with any certainty to be within the latest state or outside it.

Data above the uncertain band is classified high outlier "H" and data below the uncertain band is classified low outlier "L", with a trainable confidence of 90% or greater if it was also determined to be physically unexplainable (heuristically). The HH and LL threshold have a trainable statistical confidence of 90% or greater based on statistics alone. Extremely high "EH" and extremely low "EL" points are defined as a multiple (trained multiplier) of the standard deviation of the point before or after it.

The first column in table 31 numbers the possible cases and shows 17 of 64 possible cases for this example. The second column shows the band in which the last data point fell (in this case the last delta EGT point). The third column shows the band in which the current point resides. The fourth column has a 3 if the last point was classified an outlier and a 4 if it was accepted. The fifth column has a 3 if the current point was classified an outlier, a 4 if the current point was accepted, and a 1,n if the last point was reset from outlier to an accepted point because it was demonstrated to be persistent by the confirmation of the current point. The sixth and seventh columns are the same as the fourth and fifth with the additional evidence that the data is not physically explainable. The output of the rule based determination derived from table 31 can be combined with the output of PBNN 1 to increase the confidence of the validation.

As a result, the PBNN of the present invention eliminates the need for an engineer to be present to recognize such patterns. The specialist's knowledge is embedded in a specifically tailored PBNN to automatically improve the quality of the data. In a typical scenario using the PBNN of the present invention, data scatter as measured by the standard deviation of the data is typically reduced 10% to 25% without any parameter level bias. No data is removed but a small percentage of the scatter point vectors (typically 2% to 6% of the points) are replaced. Since the vector consists of many parameters, a much larger percentage of the vectors are improved thereby improving modular performance analysis. A small additional benefit is obtained it the weightings 17 in the network leading to the output nodes are optimized for the power system cycle. For example, one set of weightings works for all commercial jet engines. However, by tuning the weightings 17 specifically for an earlier low bypass engine, a data validation benefit is achieved with respect to such engines.

It is apparent that there has been provided in accordance with the present invention a PBNN for applying a heuristic model to a plurality of physical system inputs to identify outlier data and persistent system changes, and validate non-anomalous data inputs. While the present invention has been described in the context of specific embodiments thereof, other alternatives, modifications, and variations will become apparent to those skilled in the art having read the foregoing description. Accordingly, it is intended to embrace those alternatives, modifications, and variations as fall within the broad scope of the appended claims.

## Claims

1. A physics based neural network (PBNN) for validating data in a physical system comprising:
a plurality of input nodes each receiving at least one input comprising an average measurement of a component and a standard deviation measurement of a component of said physical system and comprising a transfer function for converting said at least one input into an output;
a plurality of intermediate nodes each receiving at least one output from at least one of said plurality of input nodes and comprising a transfer function embedded with knowledge of said physical system for converting said at least one output into an intermediate output; and
a plurality of output nodes each receiving at least one intermediate output from said plurality of intermediate nodes and comprising a transfer function for outputting said average measurement of a component when said transfer function evaluates to a value greater than zero;
wherein said PBNN is trained with a predetermined data set.

2. The PBNN of claim 1 wherein said plurality of average measurements and said plurality of standard deviation measurements are computed by a PBNN.

3. The PBNN of claim 1 additionally comprising a rule based output combined with said outputted average measurement of said component.
